# EUROPEAN PATENT APPLICATION

(11) **EP 4 417 810 A1**
(43) Date of publication of application: **21.08.2024**
(21) Application number: 23157195.1
(22) Date of filing: 17.02.2023
(51) Int. Cl.: F03B 13/22, F03B 17/06

(54) **COMBINED BREAKWATER AND WAVE ENERGY CONVERTER**

(71) Applicant: Schneider, Jonathan, 08005 Barcelona (ES)
(72) Inventor: Schneider, Jonathan, 08005 Barcelona (ES)
(74) Representative: Fresh IP

(57) **Abstract**

A device for converting omni-directional fluid flow to unidirectional flow that can be provided in a combined breakwater and energy converter system to generate electricity from coastal waters. Concrete stators 8 form part of a barrier of a breakwater, the stators arranged about a central rotation chamber 6, with adjacent stators forming fluid inlets 10 to the chamber, the chamber having a rotator with a central rotatable axle 2 mounted to at least two blades 4. The inlets are funnelled to provide an entrance to the inlet greater in size than the exit into the chamber and the inlet vector is angled with respect to the central axle, being directed towards the blades. Omnidirectional wave flows can enter these inlets and be converted into unidirectional flow to effect unidirectional rotation of the axle. This rotational movement is used for the generation of electricity.

## Description

### Field of the Invention

The present invention provides a device for the conversion of omnidirectional fluid flow to unidirectional fluid flow and to the incorporation of such a device into a combined breakwater and wave energy converter to harvest energy from breaking waves.

### Background of the Invention

There is a strong need and desire to be able to produce as much electricity as possible from renewable sources, such as wind and waves. Existing categories of wave energy converters rely on waves to be somewhat periodic, approach from specific directions, or both. Many have to be placed away from the shore to function correctly, resulting in lengthy cables or transport being required to harvest this energy, reducing its efficiency. The remote location of the wave converters also creates problems with installation and maintenance.

A breakwater is part of a coastal management system provided to protect coastal areas. It is a permanent structure constructed at a coastal area to act as a barrier to protect against tides, currents, waves, and storm surges. The majority of breakwaters are large concrete structures that remove energy from waves, reducing their impact on the shoreline, minimizing erosion and preventing damage to manmade structures constructed on the shore. It would be beneficial if this energy could be harnessed but the changing wave direction and water levels experienced at break waters is problematic.

It is an object of the present invention to provide a device for the conversion of omnidirectional fluid flow to unidirectional fluid flow that aims to overcome or alleviate the above-mentioned problems.

Yet a further object of the present invention is to provide a combined breakwater and wave energy converter that reduces or eliminates the above-mentioned problems to enable harnessing of energy from breaking waves.

### Summary of the Invention

According to a first aspect of the present invention, there is provided a device for converting omni-directional fluid flow to unidirectional flow, the device comprising:
a plurality of stationary stators arranged about a central rotation chamber;
adjacent stators forming at least part of a fluid inlet to the central rotation chamber, wherein the inlet is funnelled to provide an entrance to the inlet that is greater in size than the exit into the chamber;
a rotator provided within the chamber, the rotator having a central rotatable axle mounted to at least two blades; and
wherein the inlet vector is angled with respect to the central axle, being directed towards the blades.

The device directs fluid flow from any direction through the funnelled inlets onto the blades to effect unidirectional rotation of the rotator. The central rotation chamber is preferably cylindrical. Preferably, the axle is connectable to a generator for generation of electricity.

In this manner, the omnidirectional fluid flow through the device is converted into unidirectional rotation for the generation of electricity.

Preferably, the at least one rotator is connected to a brushed motor that may be connected to a generator via a gear.

The device preferably forms part of a breakwater system for harvesting energy from moving water, such as breaking waves. Preferably, the stators form part of a breakwater, for example, comprising concrete blocks arranged to provide the funnelled inlets around the central rotation chamber. More preferably, the stators also form the boundary of the central rotation chamber.

To this end, a second aspect of the present invention provides a combined breakwater and wave energy converter system comprising a device according to a first aspect of the present invention wherein the plurality of stators comprise part of a barrier of a breakwater, the system further comprising a generator for converting rotational energy of the rotator to electrical energy. More preferably, the system comprises multiple devices of the first aspect of the present invention.

It is envisaged that this type of system could be incorporated into new or existing breakwater structures to harness energy from the movement of sea water.

The device may include any number of stators provided around the central chamber. The stators may be provided in a variety of shapes and sizes but the walls of adjacent stators should be such as to provide a funnelled inlet. The funnelled inlet may be formed entirely from adjacent stators or, alternatively, at least part of the central rotation chamber may form part of a funnelled inlet.

In one embodiment, each stator may be in the general shape of a triangle wherein the triangular stators are orientated with respect to each other to provide a funnelling effect towards the central rotation chamber, with the entrance to the inlet being much wider than its exit at the central chamber and the exit at the central chamber being angled away from the central rotatable axle.

In another embodiment a series of substantially semi-cylindrical stators may be arranged symmetrically about the central rotation chamber, preferably wherein each stator has a concave forward facing wall and a convex rearward facing wall. The stators are arranged uniformly around the central chamber to provide the funnelling effect towards the central rotation chamber, with the entrance to the inlet being much wider than its exit at the central chamber.

Alternatively, each stator may comprise front and rear walls that are substantially S-shaped, the stators again being arranged symmetrically about the central rotation chamber. In this embodiment, the shape of the front and rear walls is such as to create entry at an angle into the rotation chamber, together with a large entrance into the funnelled inlets and a narrow exit into the chamber. In embodiments, each stator may be provided with a bulbous section orientated towards the rotation chamber with a narrowing or neck towards the outer head of the stator. The narrow neck regions of adjacent stators form the wider entrance to the inlet and the adjacent bulbous sections form the narrower exit from the inlet into the rotation chamber. Preferably, the shape or orientation of the bulbous sections up to an inner tip of the stator is such as to direct fluid into the chamber at an angle to the central axle of the chamber.

In embodiments, the rotation chamber comprises at least one wall, preferably being cylindrical, wherein at least part of the wall and the adjacent stators form the funnelled inlet. The chamber wall may be a continuous wall provided with slots for forming the exit into the chamber or the chamber wall may be comprised of multiple walls wherein a gap between each wall forms the exit of the inlet into the rotational chamber.

In one embodiment, a cubic device provides a three-dimensional funnelling effect into the rotational chamber. The funnelled inlets into the rotational chamber may be formed from symmetrical pieces of material, such as acrylics, that are secured together to provide an outer and inner box, the outer and inner box together forming the funnelled inlets and the inner box also forming the rotational chamber for housing the rotator and blades. Preferably, the stators forming the outer box are planar pieces, for example trapezoids, that are assembled together to provide a funnelling effect towards the central rotational chamber. The inner box may provide the walls for the rotational chamber, the walls directing the funnelled inlet to create an entry at an angle into the rotation chamber. Ideally, the walls for the rotational chamber include a slight curvature to direct fluid flow into the chamber and include a curved lip for defining the inlet to the chamber with an adjacent wall.

The entrance to the rotational chamber (i.e., exit of the funnelled inlet) is preferably a continuous opening between adjacent stators and/or part of the rotational chamber. However, other configurations may be provided. For example, in one embodiment stator connected rods may extend across an entrance at intervals or the entrance may form a grid-like structure, serving to prevent larger debris from entering the rotational chamber. Each entrance to the rotational chamber may also be sheared, twisted and/or comprise multiple passages, such as multiple adjacent channels extending across the length and/or breadth of the entrance. The cross-section of these channels may be any shape but preferably is circular or square.

Optionally, the position of the stators may be maintained by securing the ends of the stators to one or more end plates. Ideally, the entrance to the rotational chamber lies substantially flush with these end plates.

Any number and configuration of blades may be provided in the device according to the invention. In a preferred embodiment, two blades are provided, preferably being two opposing curved blades. Alternatively, the blades may comprise wing-like structures, for example being in the form of a hydro- or airfoil.

The blades may be formed from disused oil drums.

In one embodiment, the rotator may be in the general shape of a spindle, having a larger central region which tapers to a tip at opposing ends. Preferably, the blades are mounted to the spindle, preferably at the or towards the larger central region of the spindle. This may be addressed by the concavely decreasing radius of the rotator diverting high velocity flow to a vector with a radial component and wall-facing component, both into the vortex direction and into regions of lower flow velocity at the bottom and top walls.

The system of the present invention may also be configured to ensure that it is able to deal with debris associated with coastal and other waters. Preferably, the spacing of the parts of the stators, blades and rotator may be configured such as to allow small pebbles and other debris to move freely through the system and be expelled. Larger debris will be too big to enter the rotation chamber due to the narrow entrance of the funnelled inlets at the chamber and thus will not obstruct rotation within the central chamber. Preferably, the spacing between the rotator and the walls of the chamber should be greater than the exit of the funnelled inlet into the rotation chamber. Mounting the blades to the middle of the cylinder and providing a relatively flexible material for the blades also gives the system the ability to recover from sand and stones.

Preferably, the wider end of the funnelled inlet does not point in the exact direction as the inlet vector but has a vector closer to the radial vector of the system's centre. The funnel shape is preferably bent/curved between these two vectors. In a preferred embodiment, a convex shape is used to allow the fluid to enter the funnels easily.

It is to be appreciated that multiple arrangements of the system could be provided along a shoreline to form a breakwater thereby providing a significant amount of energy conversion from the motion of waves at the shoreline.

### Brief Description of the Invention

For a better understanding of the present invention and to show more clearly how it may be carried into effect, reference will now be made by way of example only to the accompanying drawings in which:
Figure 1 is schematic diagram from above of a combined breakwater and wave energy converter according to one embodiment of the present invention;
Figure 2 is a schematic side perspective view of the rotator with two blades for installation within the rotation chamber of the combined breakwater and wave energy converter shown in Figure 1;
Figure 3A is an exploded view of the components of another embodiment of a combined breakwater and wave energy converter according to the invention;
Figure 3B is a top view of the assembled combined breakwater and wave energy converter shown in Figure 3A, with top plate removed;
Figure 3C is a perspective side view of the assembled combined breakwater and wave energy converter shown in Figure 3A;
Figure 3D illustrates fluid flow within the combined breakwater and wave energy converter of Figures 3A to 3C;
Figure 3E illustrates movement of debris within the combined breakwater and wave energy converter of Figures 3A to 3C;
Figure 4A is an exploded view of the components of a combined breakwater and wave energy converter according to yet another embodiment of the present invention;
Figure 4B is a top view of the assembled combined breakwater and wave energy converter shown in Figure 4A, with top plate removed;
Figure 4C is a perspective side view of the assembled combined breakwater and wave energy converter shown in Figure 4A;
Figure 4D is an expanded side view of one input channel to the rotational chamber of the combined breakwater and wave energy converter shown in Figure 4A;
Figure 4E illustrates fluid flow within the combined breakwater and wave energy converter of Figures 4A to 4D;
Figure 4F illustrates movement of debris within the combined breakwater and wave energy converter of Figures 4A to 4D;
Figure 5A is a top view of one embodiment of the blades for a rotational chamber of a combined breakwater and wave energy converter according to the invention;
Figure 5B is a side view of the blades of Figure 5A;
Figure 5C is a top view of one embodiment of rotator for a rotational chamber of a combined breakwater and wave energy converter according to the invention;
Figure 5D is a side view of the rotator shown in Figure 5C;
Figure 6 is a simulation of fluid flow through the device shown in Figures 3A to 3E;
Figure 7 is a simulation of fluid flow through the device shown in Figures 4A to 4F;
Figure 8A is an upper perspective side view of another embodiment of an assembled combined breakwater and wave energy converter according to the present invention;
Figure 8B is a lower perspective side of the device shown in Figure 8A shown from another angle;
Figure 8C is a view of the inner rotational chamber of the device shown in Figures 8A and 8B;
Figure 8D is a perspective view of the rotator removed from the rotational chamber shown in Figure 8C;
Figure 9A is an exploded view of the rotational chamber and rotator of the combined breakwater and wave energy converter shown in Figures 8A to 8D;
Figure 9B is an exploded view of the stators and funnelled inlets of the combined breakwater and wave energy converter shown in Figures 8A to 8D;
Figure 10A is a perspective view of a yet further embodiment of a combined breakwater and wave energy converter according to the present invention;
Figure 10B is perspective view of a rotator for the combined breakwater and wave energy converter shown in Figure 10A;
Figure 10C is a top view of the rotational chamber, funnelled inlets and stators of the combined breakwater and energy converter of Figure 10A, shown without the rotator in the rotational chamber;
Figure 11A to 11D are schematic drawings of four different configurations of entrances to the rotational chambers that may be incorporated into a combined breakwater and energy converter according to the present invention.

### Detailed Description of the Invention

The present invention provides a novel combined breakwater and wave energy converter system that is able to harness energy from breaking, unperiodic waves, including those reflected from breakwaters, and breaking beach waves. The invention enables omni-directional fluid flow, such as that found at breakwaters, to be converted into a single directional flow for moving a single rotating part that can be used to generate energy. Importantly, the combined system can be constructed as part of a breakwater using existing materials, such as concrete blocks and oil barrels, thereby reducing further the environmental impact of the system.

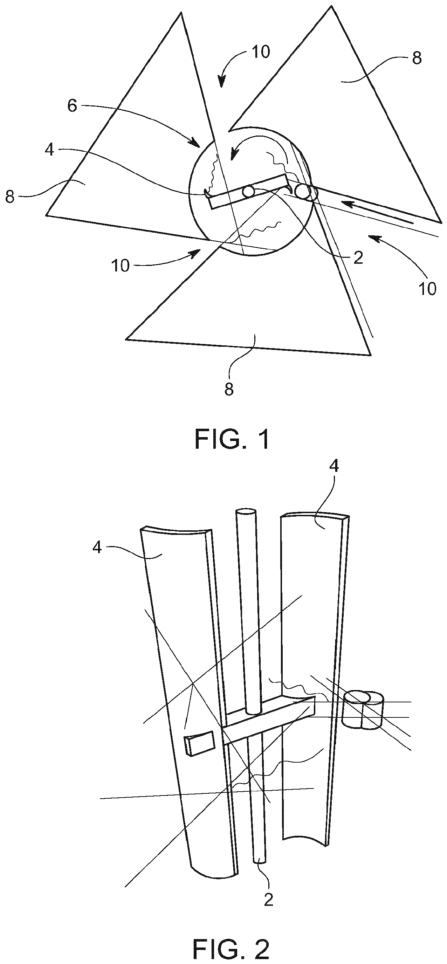

Figures 1 and 2 illustrate the general principle for a combined breakwater and wave energy converter system or apparatus according to the present invention. The system comprises a rotating axle or rotator 2 connected to blades 4 which are mounted within a cylindrical rotation chamber 6. In this embodiment, two opposing curved blades are provided but any number and configuration of blades may be provided, as required. The cylindrical rotation chamber is surrounded by multiple stators 8 which form part of a breakwater, ideally being formed from concrete blocks. In this embodiment, each stator 8 is in the general shape of a triangle. The stators are configured to create multiple funnelled inlets 10 into the rotation chamber 6, the entry of the funnelled inlets to the rotation chamber being angled with respect to the centre of the chamber such that fluid passing in through the funnelled inlets is directed at an angle to the centre. The stators are responsible for creating a vortex and fulfil three functions within the system, (i) serve as walls for the rotational chamber 6; (ii) act as funnels to direct fluid from outside the system to the inlets of the rotational chamber (which also happen to be outlets at different points in time; and (iii) have an optional stator breakwater function.

The larger white arrows shown in Figure 1 illustrate fluid movement through the system. Only movement through one inlet is illustrated but it is to be appreciated that fluid would enter at each inlet. It has been shown that omnidirectional fluid flow, such as sea water waves breaking onto the stators 8 which form part of a breakwater, is converted into a single directional flow by the funnelled inlets 10 directing water in through the narrower, angled inlets to the rotation chamber 6 to drive the blades 4 which cause rotation of the rotator 2. This unidirectional rotation of the rotator enables harnessing of energy, for example, by the connection of a brushed motor to the rotator that may be connected to a generator via a gear (not shown).

The embodiment shown in Figure 1 illustrates the general working principle for enabling the harnessing of energy from the movement of water associated with breakwaters. It is envisaged that this type of system could be incorporated into new or existing breakwater structures to harness energy from the movement of sea water. The concrete blocks that are normally provided to form breakwaters could be cast in the required shape to form the stators and arranged to form the funnelled inlets. It is feasible that the blades provided in the rotation chamber may be made from disused oil drums. This not only ensures that the system is relatively cheap to install and repair but also enables the parts to be re-cycled if damaged during use.

The inventor has found that unidirectional, substantially continuous rotation of the rotator is achieved by a cylindrical, rather than non-cylindrical rotation chamber and the inlets being funnelled, with a larger entry to the inlet relative to the exit of the inlet at the rotation chamber. The outlet into the rotation chamber should also be such as to direct fluid into the chamber at an angle to centre. These factors direct omnidirectional flow of water in a single direction onto the blades for imparting unidirectional rotation of the rotator which can be used to transfer energy to a generator.

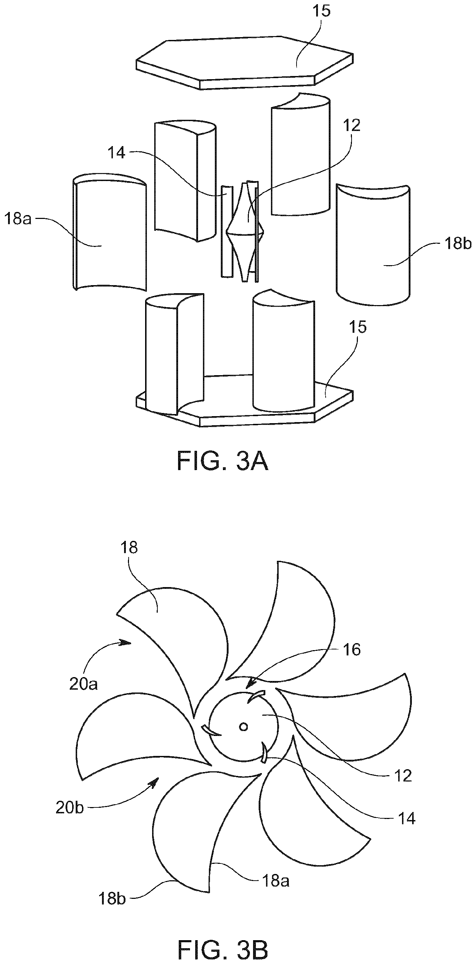

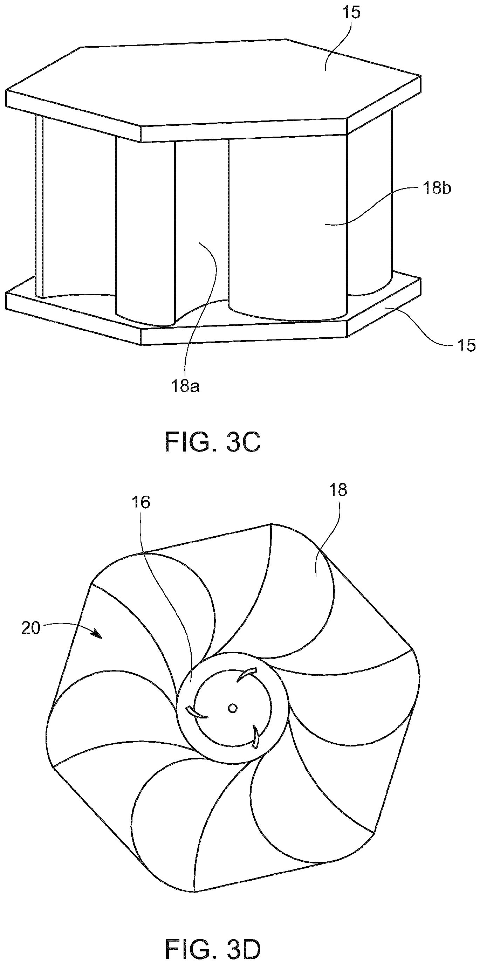

Figures 3A to 3E illustrate another embodiment of a combined breakwater and wave energy converter system or apparatus according to the present invention. The system again comprises a series of stators 18 arranged symmetrically about a central rotation chamber 16, the chamber having a rotator 12 with multiple blades 14. In this embodiment, the stators 18 are substantially semi-cylindrical, having a concave forward facing wall 18a and a convex rearward facing wall 18b (i.e., each stator is substantially semi-circular in cross-section). The stators are arranged uniformly around the central chamber or hub to provide a funnelling effect towards the central rotation chamber 16, with the entrance to the inlet 20a being much wider than its exit 20b at the central chamber. The positioning of the stators is maintained by securing the ends of the stators on end plates 15. Thus, the stators resemble in appearance blades on a propeller, with the leading edge 18a of each stator being concave and the trailing edge 18b convex. The stators are not perpendicular to the surface of the central rotation chamber 16 but instead are 'tilted' at an angle, termed "rake".

This arrangement of stationary stators provided within a breakwater system directs water flowing in any direction at an angle into the rotation chamber with minimal backwash, thereby propelling the blades 14 in a single direction to rotate the rotator. Movement of the water is illustrated in Figure 3D wherein the darker shading at 20 represents the funnelling of omnidirectional water towards the rotation chamber 16 where the lighter shading represents unidirectional flow. The C-shaped stators convert a lot of flow to vortex flow but may act as a waterwheel under very strong currents. Thus, this type of arrangement may be more suitable for waters that do not experience very strong currents, such as more sheltered bays.

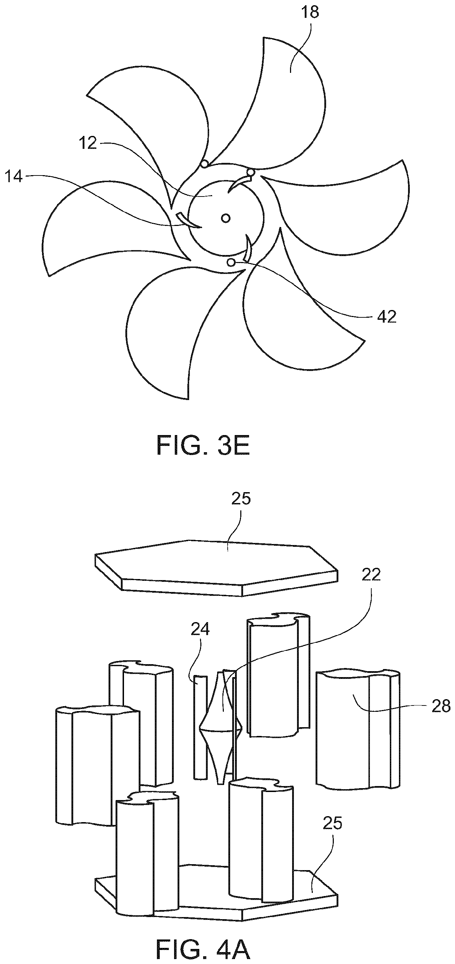

The system of the present invention may also be configured to ensure that it is able to deal with debris associated with coastal and other waters. For example, small pebbles and sand are often associated with the shoreline which could become trapped within the system and prevent rotation of the rotator. The spacing of the parts of the stators and blades may be configured such as to allow small pebbles, represented by 42 in Figure 3E, to move freely through the system and be expelled. Larger debris will be too big to enter the rotation chamber due to the narrow entrance of the funnelled inlets at the chamber and thus will not obstruct rotation within the central chamber 16. The spacing between the rotator and the walls of the chamber should be greater than the inlet dimensions into the rotation chamber.

Yet a further embodiment of the present invention is illustrated in Figures 4A to 4F of the accompanying drawings. The shaping of the stators 28 in this embodiment has been optimised further to aid continuous, unidirectional rotation of the rotator from omnidirectional water flowing around the system. The front and rear walls 28a, 28b of each stator are substantially S-shaped. This arrangement has been found to create less vortex flow relative to the C-shaped stators but does not suffer from the waterwheel problem under very strong currents. Thus, this arrangement may be more suitable for waters that do experience strong currents.

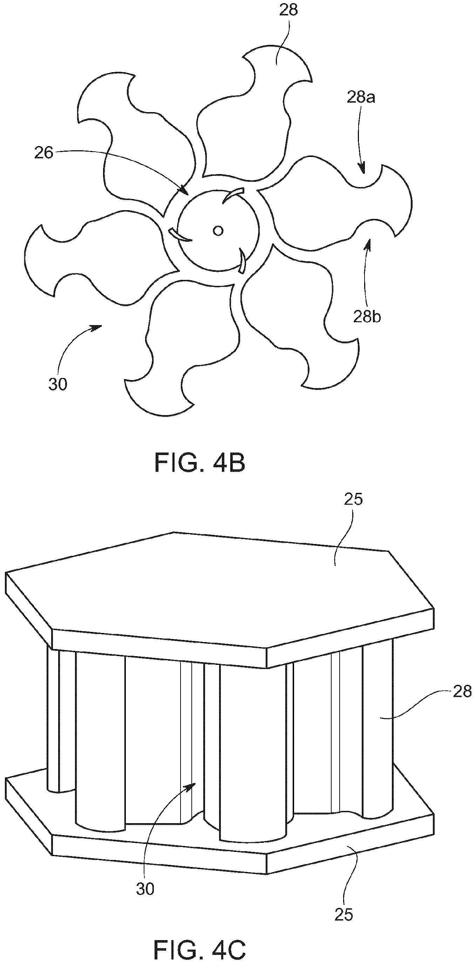

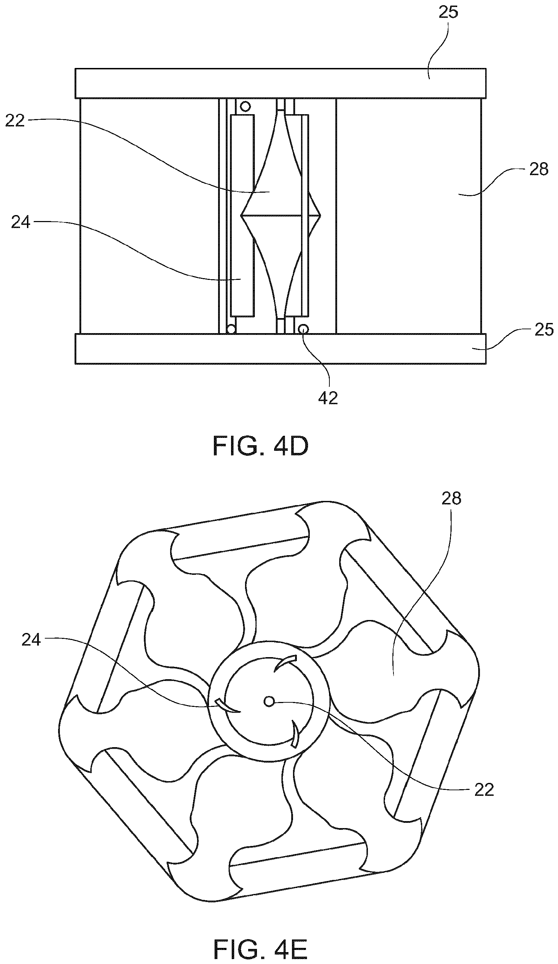

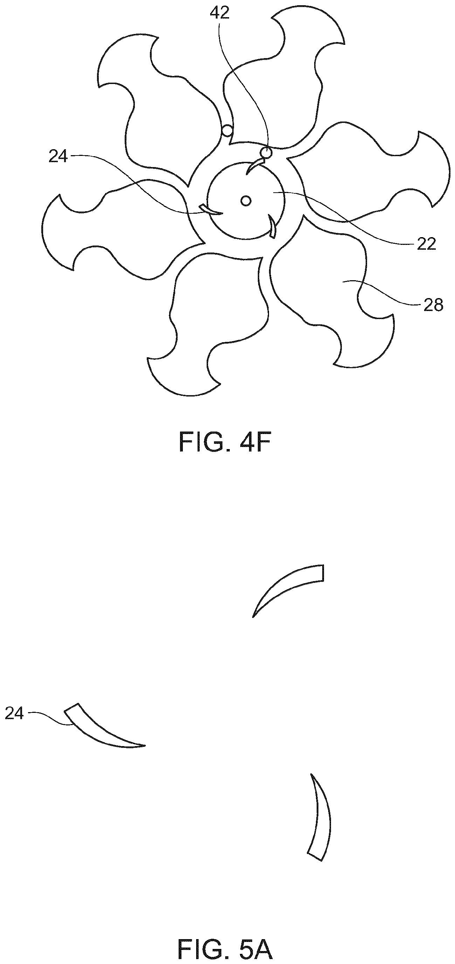

In further detail, the stators 28 are again arranged symmetrically about the central rotation chamber 26 which has a central rotator 22 connected to blades 24 but in this embodiment the stators 28 are not tilted at an angle, instead the shape of the front 28a and rear walls 28b is such as to create entry at an angle into the rotation chamber, together with a large entrance into the funnelled inlets 30 and a narrow exit into the chamber 26. In particular, each stator 28 is provided with a bulbous section orientated towards the rotation chamber with a narrowing or neck towards the outer head of the stator, see most clearly in Figure 4B. The narrow neck regions of adjacent stators form the wider entrance to the inlet 30 and the adjacent bulbous sections form the narrower exit from the inlet into the rotation chamber 26. The shape or orientation of the bulbous sections up to the inner tip of the stator is such as to direct fluid into the chamber at an angle to the axis of rotation. The stators are maintained in position by securing their upper and lower ends to plates 25. The spacing between the rotator 22 and the walls of the chamber 26 formed by the bottom wall of the stators is again greater than the exit into the chamber formed between adjacent stators, as shown in Figure 4F. Additionally, as visible in Figure 4D, the gap provided between the base of the blades 24 and rotator 22 and the end plates 25 is of a sufficient size to accommodate small pebbles and other debris 42 without these getting trapped in the device.

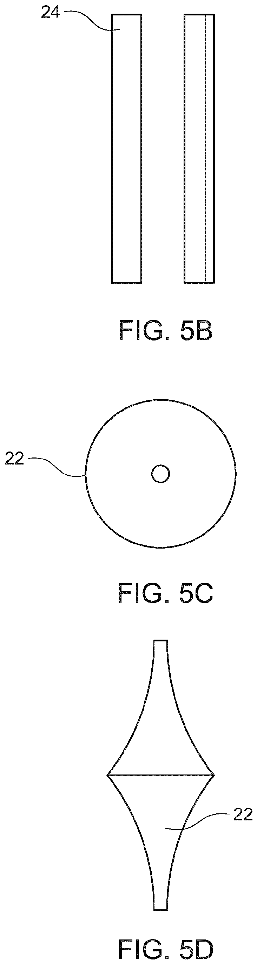

Figures 5A to 5C illustrate in further detail one embodiment of a rotator and blades which are incorporated into the systems shown in Figures 3A-3E and 4A-4F of the present invention. However, other configurations may be utilized. The central rotator 22 is in the general shape of a spindle, having a larger central region which tapers to a tip at opposing ends. In the specific example shown, two cones are provided with concave sides which are then glued together to form the spindle-like rotator. The blades 24 are mounted to this spindle, the blades comprising extruded hydrofoil shapes. The blades are mounted to the middle, larger central region of the spindle. In the illustrated embodiment, three blades are provided but any number may be used depending upon the size of the chamber. The provision of the central rotator that has a bigger radius at the middle and concavely decreasing radius to the sides combined with airfoils mounted at the middle assists in converting fluid flow from a vortex, rather than converting straight flows.

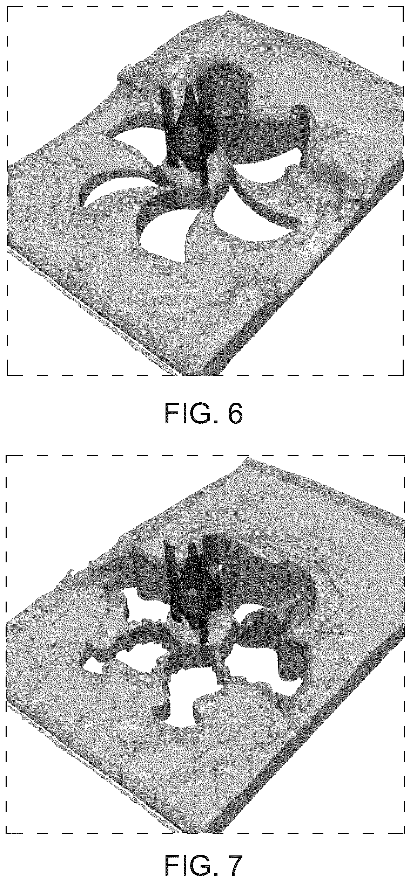

Figures 6 and 7 illustrate respectively fluid flow simulations through the device of Figures 3A to 3E and the device of Figures 4 to 4F. These simulations demonstrated that both configurations provided continuous unidirectional rotation of the central axle. This was also substantiated in the field, with unidirectional rotation being maintained with any velocity of flow of fluid, any directional flow of fluid over the device and the device also continued to operate if its position was altered and/or debris, such as small stones entered the device.

It is to be appreciated that many different stator and rotation chamber configurations may be adopted in a system according to the present invention. However, the orientation of the funnelled inlets towards the blades is important. The system may be compared with a Darrieu Vertical Axis wind turbine. In those turbines, a wind vector blowing straight through the device turns its rotator as it interacts with airfoils. The wind vector can point in any direction on a horizontal plane. In contrast, in the present system, the flow is not straight like in the Darrieu turbines. The flow forms a vortex, turning in one direction only. The rotator is adjusted to this circumstance by the angle of attack of the blades. The blades have an angle of attack towards the inlets, where the strongest forces apply. Centrifugal forces of the fluid apply as well, but are comparatively weaker than the inlet forces. So the same blades when viewed from their trailing edge have an angle of attack towards the centrifugal direction. The rotator is placed in the rotational flow chamber. This is a hollow cylindric shape with gaps in its circle. These gaps are the inlets and outlets of the rotational flow chamber. All inlet-vectors point in the direction that the vortex should turn.

Attached to the inlet/entrance to the chamber is the narrow end of the funnel. Preferably, the wide end of the funnel does not point in the exact direction as the inlet vector, but has a vector closer to the radial vector of the system's centre. The funnel shape is preferably bent/curved between these two vectors, which prevents larger debris and stones from entering into the rotational flow chamber. In a preferred embodiment, a convex shape is used to allow the fluid to enter the funnels easily. Flexible parameters of the breakwater system include the size of the rotational chamber and the exact funnel shape, size and curvature.

For the system to work efficiently in real-life applications, further issues need to be addressed. There will be a lower flow velocity towards the top and bottom wall (due to the boundary layer). This may be addressed by the concavely decreasing radius of the cylinder diverting high velocity flow to a vector with a radial component and wall-facing component, both into the vortex direction and into regions of lower flow velocity at the bottom and top walls. Fluid flow out of the rotational chamber also has to be considered. Flow out of the rotational chamber occurs due to the centrifugal forces in the vortex. If one of the funnels has a lower waterline than the others, or pressure at one inlet is lower than on others it acts as an outlet. This enables the device to continue to function when fully submerged. Due to the vector of the inlet the vortex motion is not significantly impacted, unless the inlet is large. Debris and stones inside the chamber must also be dealt with. In embodiments, debris that does manage to get through the curved funnel can be expected to be smaller than the inlet. By adding spacing bigger than that size between the rotator blades and the walls, the debris can pass through the rotational chamber. l. Mounting the blades to the middle of the cylinder and a relatively flexible material of the blades also gives the system the ability to recover from sand and stones. Thus, the problem of debris or stones hitting hydrofoils is reduced by the curvature of the funnel, the flexibility of the blade mounted in the middle of the central cylinder and the spacing between blade and rotating chamber walls, which allows small debris to pass through and prevents large debris from entering.

While the position of the blades works with other mounting points along the height of the rotator, the cylinder has the benefit of acting as an axle while converting flow over its surface into rotational mechanical motion. Because the rotator only turns in one direction, even a brushed motor (used as a generator) can be used to turn the rotation into electric energy. This is a cheap and readily available type of motor. The stators which form the breakwater parts of the structures may also have a point-symmetric shape, making them extrudable from a 2D shape. During construction, one mould can be used to create multiple stator parts. This design choice was inspired by cut oil barrel constructions. Oil barrels and concrete are ubiquitous materials so the stator moulds as well as the stators can be constructed cost- effectively.

It is to be appreciated that multiple arrangements of the system could be provided along a shoreline to form a breakwater thereby providing a significant amount of energy conversion from the motion of waves at the shoreline.

The present invention thus serves to prevent damage to the shore while capturing some of the waves' energy as electricity. The proximity to the shore enables easier installation and maintenance, requiring shorter cables and being closer to where the electricity will be used. Moreover, existing breakwater cubes are intentionally dropped in the water at different angles. To combine a device with those existing structures, requires the device to be able to harness energy above and below the waterline in a variety of angles. This is achievable with the present invention. Additionally, building permits for extending existing sites might be easier to get approved than completely new building sites, resulting in it being easier to adopt these environmentally friendly energy resources.

The present invention could enable breakwaters to become net-positive investments or at least have a reduced total cost of ownership if the output electricity is sold. The device does not need to handle negative voltages. Brushed motors are the cheapest, most ubiquitous motors and when used as a generator they can completely flood and still continue to produce electricity. As a result, more sensitive electrical components can be kept away from salt water. Stormy weather can topple the device but it still continues to generate electricity, since it can take advantage of upwards, downwards and lateral movements of the surrounding fluid. Even if the energy converter was damaged or broke apart during a heavy storm, its stator parts will continue to act as breakwaters. Moreover, a lost brushed motor would have a lower ecological impact than components of other wave energy converters.

Thus, the present invention provides a system that not only serves to break sea water, removing the energy from the waves to protect the coastline but also converts that energy into electricity.

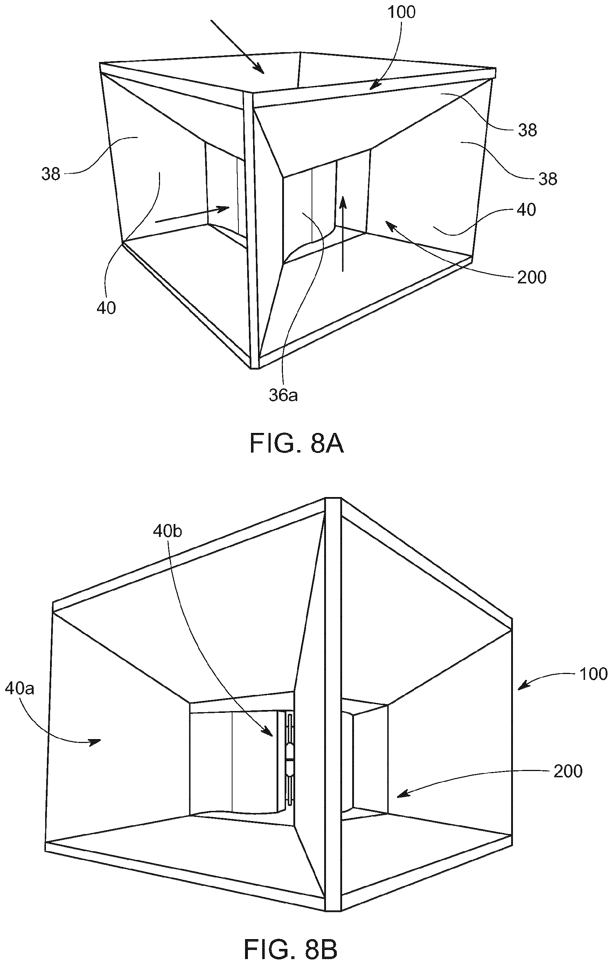

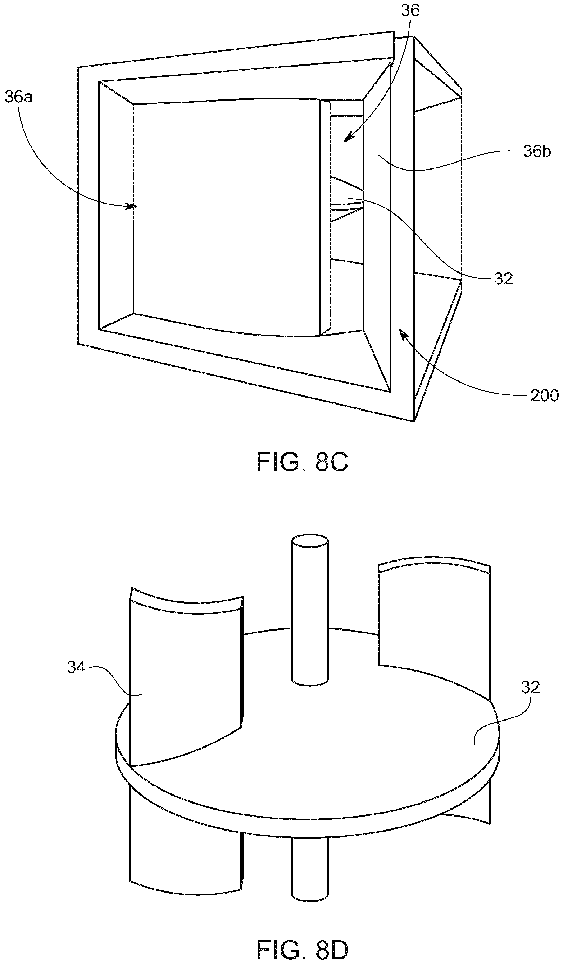

Figures 8A to 9B of the accompanying drawings illustrates yet another embodiment of the present invention. In this embodiment, a cubic device is provided which provides a three-dimensional funnelling effect into the rotational chamber 36 from the top, bottom and all four sides of the cube, as illustrated by the bold arrows in Figure 8C. The funnelled inlets 40 into the rotational chamber 36 may be formed from symmetrical pieces of material, such as acrylics, that are secured together to provide an outer and inner box 100, 200, the outer and inner box together forming the funnelled inlets 40 and the inner box 200 also forming the rotational chamber 36 for housing the rotator 32 with blades 34. This version is less appropriate for a breakwater formed from concrete blocks but may be installed in coastal areas where a different, possibly more aesthetic and modern design is required as, for example, the cubes may be formed from transparent material to provide a glass-like appearance to the breakwater.

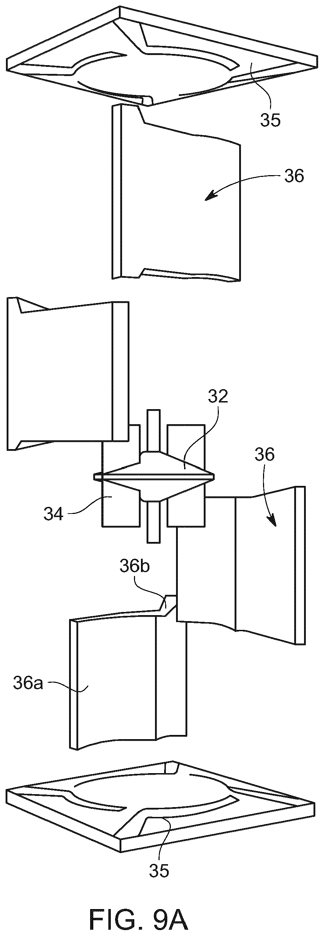

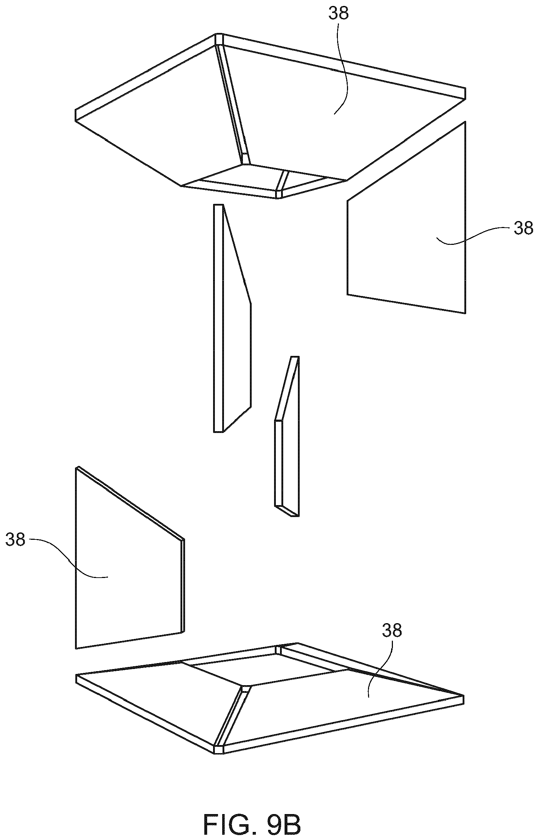

The stators 38 forming the outer box 100 are planar pieces, for example trapezoids, that are assembled together to provide a funnelling effect towards the central rotational chamber 36, i.e. the entrance 40a to the funnelled inlets 40 is greater than the exit 40b at the central rotational chamber. Thus, referring to Figure 9B, four identical trapezoids are provided for the sides and eight identical trapezoids are provided for the top and bottom. An inner box 200 provides the walls 36a, 36b for the rotational chamber 36, the walls directing the funnelled inlet to create an entry at an angle into the rotation chamber. Ideally, the walls 36a include a slight curvature to direct fluid flow into the chamber and include a curved lip 36b for defining the inlet to the chamber with an adjacent wall. End plates 35 are provided for maintaining the positioning of the walls 36. As with earlier embodiments, the axle of the rotator is rotated continuously by fluid breaking all around the device and this can be used to transfer energy to a generator (not shown).

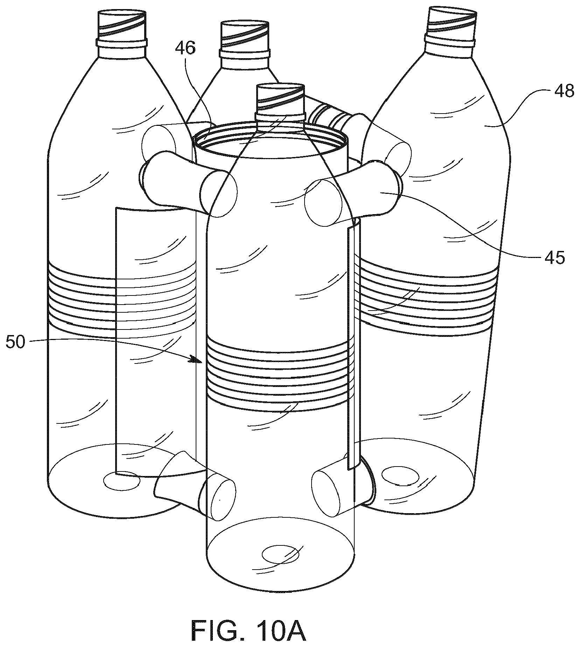

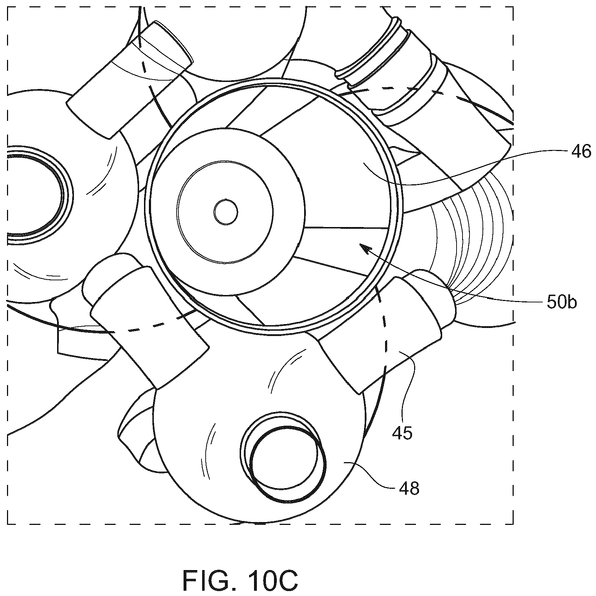

Yet a further embodiment of the present invention is shown in Figures 10A to 10C. This is a version of the invention that can be made of scrap materials, such as discarded plastic bottles and cans. As illustrated in Figure 10A, four plastic bottles 48 are arranged with spacers 45 provided at the top and bottom of each bottle, between adjacent bottles. The spacers may also be formed from scrap materials, such as bottle tops. A cylindrical can 46 that is substantially the same length as the bottles 48 is provided in the centre of the bottles, the can being provided with four longitudinal slots 50b provided off centre between adjacent bottles to provide the entrance into the chamber 46 (see Fig. 10C). The adjacent bottles, an arc of the can and slot form a funnelled inlet 50 into the chamber.

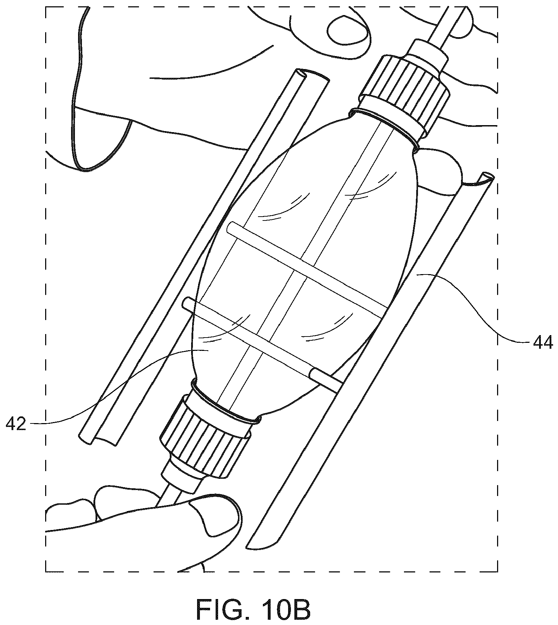

Additionally, the rotator and blades can also be made from scrap items, as demonstrated in Figure 10B. The rotator 42 is formed from two inverted halves of plastic bottles secured together with a wooden rod extending though each bottle top at opposing ends of the rotator. Additional rods are then attached to the larger central region of the rotator to form the blades 44. This is then placed within the chamber 46. As with earlier embodiments, the central rod forms the axle of the rotator which can be rotated continuously by fluid entering through the funnelled inlets 50 due to water flowing around the device and this can be used to transfer energy to a generator (not shown).

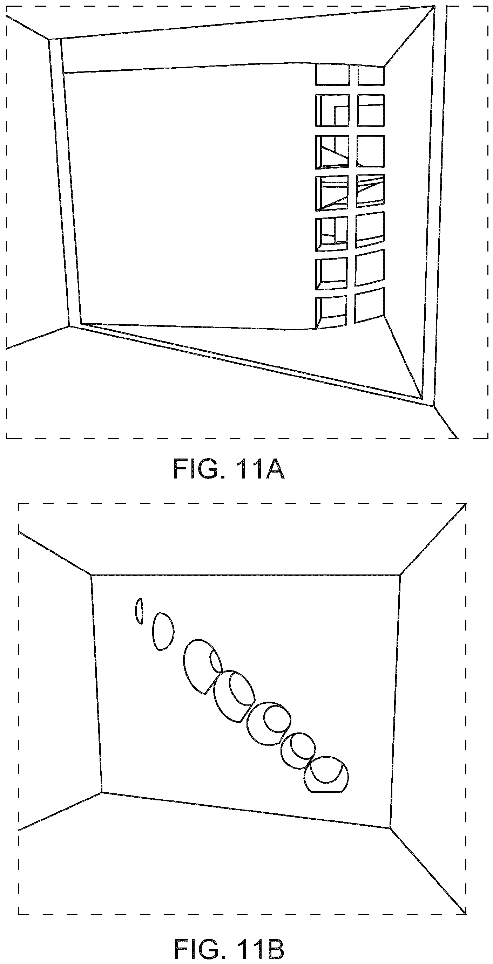

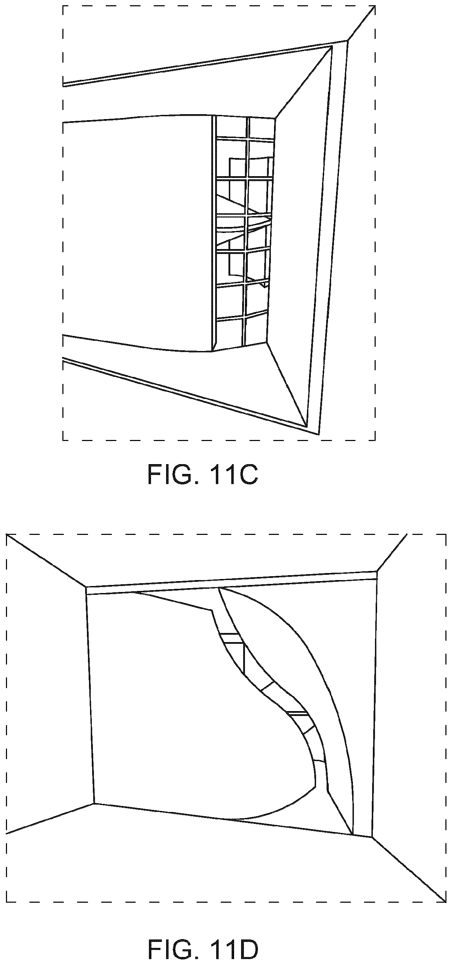

The exit from the funnelled inlet into the rotational chamber (i.e., the inlet or entrance into the rotational chamber) is preferably a continuous opening. However, in some circumstances, it may be desirable to make the opening discontinuous, for example to assist in preventing larger debris from entering the chamber. As long as the vector to the inlet is at an angle to the centre of the rotational chamber, the device will still operate effectively. The entrance to the rotational chamber may form a grid-like structure, as illustrated in Figure 11A, may be split into multiple channels, as illustrated in Figure 11B or rods or bars may extend across the entrance from adjacent stators, as shown in Figure 11C. The entrance may also be sheared or twisted, as shown in Figure 11D.

Further modifications to the combined breakwater and energy converter system may be made without departing from the principles embodied in the examples described and illustrated herein.

## Claims

1. A device for converting omni-directional fluid flow to unidirectional flow, the device comprising:
a plurality of stationary stators arranged about a central rotation chamber;
adjacent stators forming at least part of a fluid inlet to the central rotation chamber, wherein the inlet is funnelled to provide an entrance to the inlet that is greater in size than the exit into the chamber;
a rotator provided within the chamber, the rotator having a central rotatable axle mounted to at least two blades; and
wherein the inlet vector is angled with respect to the central axle, being directed towards the blades.

2. The device as claimed in claim 1, wherein the axle is connectable to a generator for generation of electricity.

3. The device as claimed in claim 2, wherein the axle is connected to the generator via a brushed motor.

4. The device as claimed in claim 1, 2 or 3 wherein the stators form a boundary of the central rotation chamber, with walls of adjacent stators providing the funnelled inlet, preferably wherein the central rotation chamber is cylindrical.

5. The device as claimed in any one of the preceding claims wherein each stator is in the shape of a triangle wherein the triangular stators are orientated with respect to each other to provide a funnelling effect towards the central rotation chamber, with the entrance to the inlet being much wider than its exit at the central chamber and the exit at the central chamber being angled away from the central rotatable axle.

6. The device as claimed in any one of claims 1 to 4, wherein a series of substantially semi-cylindrical stators is arranged symmetrically about the central rotation chamber, preferably wherein each stator has a concave forward facing wall and a convex rearward facing wall.

7. The device as claimed in any one of claims 1 to 4, wherein a series of stators are arranged substantially symmetrically about the central rotation chamber, each stator comprising front and rear walls that are substantially S-shaped to create entry at an angle into the rotation chamber, together with a large entrance into the funnelled inlets and a narrow exit into the chamber.

8. The device as claimed in claim 7, wherein each stator is provided with a bulbous section orientated towards the rotation chamber with a narrowing or neck towards the outer head of the stator, wherein the neck regions of adjacent stators form the wider entrance to the inlet and the adjacent bulbous sections form the narrower exit from the inlet into the rotation chamber, preferable wherein the shape or orientation of the bulbous sections up to an inner tip of the stator is such as to direct fluid into the chamber at an angle to the central axle of the chamber.

9. The device as claimed in claim 1 to 3, wherein the rotation chamber comprises at least one wall, preferably being cylindrical, wherein at least part of the wall and adjacent stators form the funnelled inlet.

10. The device as claimed in claim 9, wherein the device forms a cube, the funnelled inlets into the rotational chamber being formed from symmetrical pieces of material that are secured together to provide an outer and inner box, the outer and inner box together forming the funnelled inlets and the inner box forming the rotational chamber for housing the rotator and blades.

11. The device as claimed in any one of the preceding claims wherein the position of the stators is maintained by securing the ends of the stators to one or more end plates.

12. The device as claimed in any one of the preceding claims wherein the rotator is in the general shape of a spindle, having a larger central region which tapers to a tip at opposing ends, preferably wherein the blades are mounted to the spindle at or towards the larger central region of the spindle.

13. The device as claimed in any one of the preceding claims wherein the larger end of the funnelled inlet does not point in the exact direction as the inlet vector, but has a vector closer to the radial vector of the centre of the central rotation chamber.

14. A combined breakwater and wave energy converter system comprising a device according to any one of the preceding claims, wherein the plurality of stators comprise part of a barrier of a breakwater, the system further comprising a generator for converting rotational energy of the rotator to electrical energy.

15. The system according to claim 14, wherein the stators comprise concrete blocks.
